# EUROPEAN PATENT APPLICATION

(11) **EP 3 407 649 A1**
(43) Date of publication of application: **28.11.2018**
(21) Application number: 17741394.5
(22) Date of filing: 18.01.2017
(51) Int. Cl.: H04W 52/14, H04W 16/26, H04W 52/24, H04W 72/12, H04W 88/08

(54) **RADIO BASE STATION AND COMMUNICATION CONTROL METHOD**

(30) Priority: 22.01.2016 JP 2016010798
(71) Applicant: NTT DOCOMO, INC., Chiyoda-ku Tokyo 100-6150 (JP)
(72) Inventor: ISOGAWA Takayuki, Tokyo 100--6150 (JP); OOKUBO Naoto, Tokyo 100-6150 (JP); TAKIGUCHI Takahiro, Tokyo 100-6150 (JP); UMESH Anil, Tokyo 100-6150 (JP); UCHINO Tooru, Tokyo 100-6150 (JP); TAKEDA Kazuki, Tokyo 100-6150 (JP)
(74) Representative: Hoffmann Eitle
(86) International application number: PCT/JP2017/001457
(87) International publication number: WO 2017/126517

(57) **Abstract**

The communication control method according to the present invention is performed in a radio base station (200) that includes a remote device (260) and a central aggregation device (210), and that performs radio communication with a user device (300). The communication control method includes acquiring including the remote device (260) acquiring predetermined information necessary to perform a transmission power control of an uplink signal transmitted from the user device (300); transmitting including the remote device (260) transmitting to the central aggregation device (210) the acquired predetermined information; receiving including the central aggregation device (210) receiving the predetermined information; and processing includes the central aggregation device (210) processing, based on the received predetermined information, TPC information that causes the user device (300) to perform the transmission power control.

## Description

### TECHNICAL FIELD

The present invention relates to a radio base station that includes a remote device and a central aggregation device and that performs radio communication with a user device, and a communication control method.

### BACKGROUND ART

3rd Generation Partnership Project (3GPP) specifies Long Term Evolution (LTE), and with the aim of further speeding, specifies the LTE including LTE-Advanced (hereinbelow, the LTE includes the LTE-Advanced). Moreover, in the 3GPP, specification of succeeding systems of the LTE called 5G (5th generation mobile communication system) and the like is being considered.

So-called C-RAN radio base station that includes a central aggregation device having a scheduler function (MAC scheduler) in MAC layer, and the like and a remote device that is positioned away from the installation location of the central aggregation device is used in the LTE. The remote device includes a radio unit (RF unit) such as PA (Power Amplifier) / LNA (Low Noise Amplifier), a radio transmission - reception module, and a modulation - demodulation module.

The central aggregation device and the remote device are connected to each other via a wired transmission path called a front-haul. For example, Common Public Radio Interface (CPRI) is known as an interface between the central aggregation device and the remote device.

In the discussion related to the 5G specifications, the radio physical layer (layer 1) function that is typically implemented in the central aggregation device is proposed to be implemented in the remote device (for example, Non-Patent Document 1). According to such an implementation, transmission band required for the front-haul can be reduced.

### PRIOR ART DOCUMENT

### NON-PATENT DOCUMENT

[Non-Patent Document 1]: 3GPP RWS-150051 (3GPP RAN workshop on 5G), "5G Vision for 2020 and Beyond", 3GPP, September 2015

### SUMMARY OF THE INVENTION

As explained above, the following issues arise when the radio physical layer function that is conventionally mounted in the central aggregation device is mounted in the remote device. That is, the upper layer (layer 2 and the like) function such as the MAC scheduler is mounted in the central aggregation device in a manner same as the conventional manner. Therefore, for example, to realize appropriate radio resource assignment to a user device (also referred to as a radio communication terminal or a mobile station), the MAC scheduler must be linked to the radio physical layer that performs a transmission power control of the uplink signal of the user device.

However, if the function of the upper layer such as the MAC scheduler is mounted in the central aggregation device in the same manner as before and the function of the radio physical layer is mounted separately in the remote device, the cooperation between the radio physical layer and the upper layer of the radio physical layer becomes difficult.

The present invention has been made in view of the above circumstances. It is an object of the present invention to provide a radio base station and a communication control method capable of realizing an appropriate transmission power control on a user device even when the function of the upper layer such as the MAC scheduler and the function of the radio physical layer are mounted separately.

A radio base station according to one aspect of the present invention includes a remote device and a central aggregation device, and performs radio communication with a user device. The remote device includes an information acquiring unit that acquires predetermined information necessary to perform a transmission power control of an uplink signal transmitted from the user device; and an information transmitting unit that transmits to the central aggregation device the predetermined information acquired by the information acquiring unit.

The central aggregation device includes an information receiving unit that receives the predetermined information; and a control information processing unit that processes, based on the predetermined information received by the information receiving unit, control information that causes the user device to perform the transmission power control.

A radio base station according to another aspect of the present invention includes a remote device and a central aggregation device, and performs radio communication with a user device. The remote device includes, an information acquiring unit that acquires predetermined information necessary to perform a transmission power control of an uplink signal transmitted from the user device; a control information processing unit that processes, based on the predetermined information acquired by the information acquiring unit, control information that causes the user device to perform the transmission power control; and an information transmitting unit that transmits to the central aggregation device the control information processed by the control information processing unit. The central aggregation device includes an information receiving unit that receives the control information; and a process executing unit that performs, based on the control information received by the information receiving unit, a predetermined process during the radio communication with the user device.

### BRIEF DESCRIPTION OF DRAWINGS

FIG. 1 is an overall structural diagram of a radio communication system 10.
FIG. 2 is an overall block diagram of the radio communication system 10.
FIG. 3 is a functional block diagram of a central aggregation device 210.
FIG. 4 is a functional block diagram of a remote device 260.
FIG. 5 is a conceptual diagram depicting a transmission power control (TPC) performed in the central aggregation device 210, the remote device 260, and a user device 300.
FIG. 6 is a diagram showing a sequence of a transmission power control according to a first embodiment.
FIG. 7 is a functional block diagram of a central aggregation device 210A.
FIG. 8 is a functional block diagram of a remote device 260A.
FIG. 9 is a conceptual diagram depicting a transmission power control (TPC) according to a second embodiment.
FIG. 10 is a diagram showing a sequence of a transmission power control according to the second embodiment.
FIG. 11 is a diagram showing illustrative embodiments of a protocol stack that can be included in a central aggregation device and a remote device.

### MODES FOR CARRYING OUT THE INVENTION

Exemplary embodiments are explained below with reference to the accompanying drawings. In the drawings, structural elements having the same function or configuration are indicated by the same or similar reference numerals and the explanation thereof is appropriately omitted.

### First Embodiment

### (1) Overall structural configuration of radio communication system

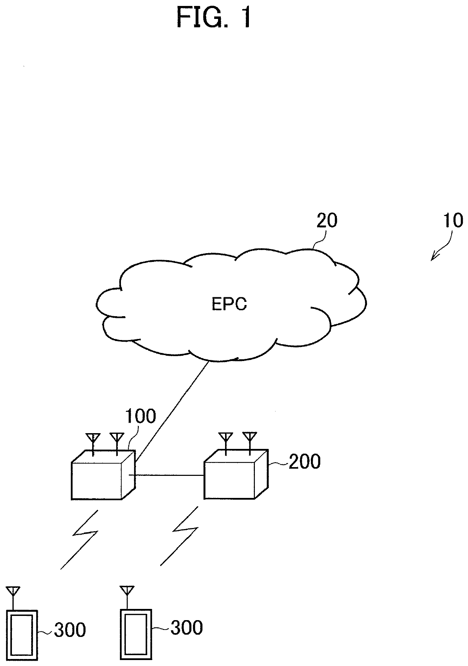

FIG. 1 is an overall structural diagram of a radio communication system 10 according to the present embodiment. The radio communication system 10 is a radio communication system in accordance with Long Term Evolution (LTE), and 5G, which is a succeeding system of the LTE.

Furthermore, in this embodiment, from the viewpoint of making the radio communication system 10 compatible with the 5G, the LTE (including LTE-Advanced) is appropriately referred to as "4G". Moreover, in this embodiment, a configuration of a radio communication system formulated immediately after the introduction of the 5G is assumed, and the 5G realizes LTE assisted operation that complements the 4G.

The radio communication system 10 includes a core network 20, a radio base station 100, a radio base station 200, and one or more user devices 300.

The core network 20 is also referred to as Evolved Packet Core (EPC), and is constituted by a mobility management entity (MME), a serving gateway (S-GW), PDN gateway (P-GW), and the like.

The radio base station 100 is 4G radio base station, and is also referred to as eNodeB. The radio base station 100 is connected to a device (node) that constitutes the core network 20 via S1-MME or S1-U interface.

The radio base station 200 is 5G radio base station. The radio base station 200 is connected to the radio base station 100 via X2 interface (for convenience, referred to as X2-AP', X2-U') .

The user device 300 can perform radio communication with the radio base station 100 and the radio base station 200. The user device 300 can be referred to as a radio communication terminal or a mobile station. By controlling radio signals transmitted from a plurality of antenna elements, the radio base station 200 and the user device 300 can support technologies such as Massive MIMO that generates a beam having higher directivity, carrier aggregation (CA) that uses a plurality of component carriers (CC), and dual connectivity (DC) that simultaneously transmits a component carrier between a plurality of radio base stations and the user device 300.

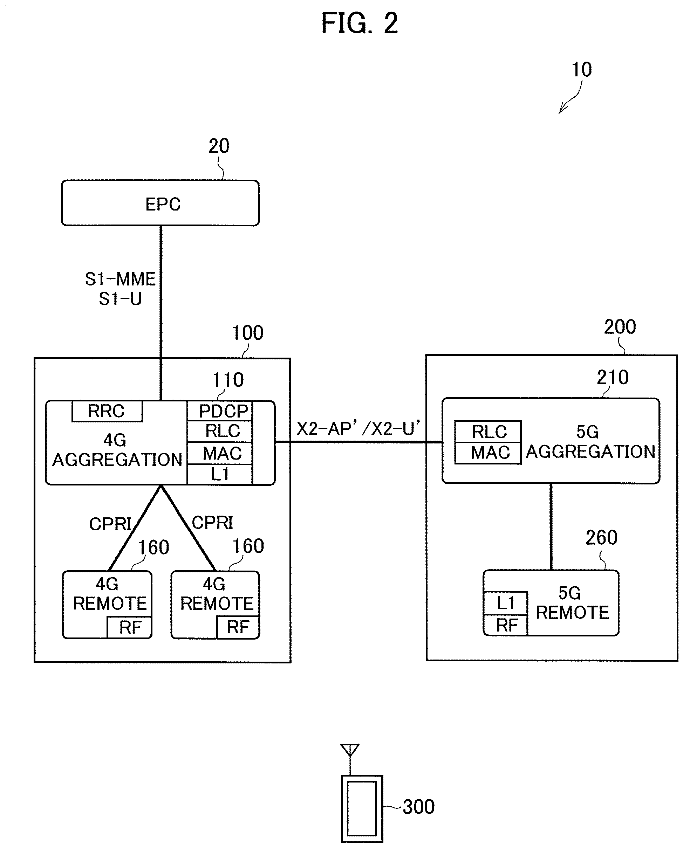

FIG. 2 is an overall block diagram of the radio communication system 10. As shown in FIG. 2, the radio base station 100 is constituted by a central aggregation device 110 and one or more remote devices 160. Similarly, the radio base station 200 is constituted by a central aggregation device 210 and a remote device 260. Furthermore, the radio base station 100 and the radio base station 200 can include devices other than the central aggregation device and the remote device.

The central aggregation device 110 includes a radio physical layer (L1), a medium access control layer (MAC), a radio link control layer (RLC), and a packet data convergence protocol layer (PDCP). Moreover, the central aggregation device 110 includes a radio resource control layer (RRC) as an upper layer of the PDCP.

The remote device 160 can be positioned at a remote location away from the installation position of the central aggregation device 110. The remote device 160 includes a radio unit (RF) such as the PA (Power Amplifier) / LNA (Low Noise Amplifier), a radio transmission - reception module, and a modulation - demodulation module.

The central aggregation device 110 is also referred to as a digital processing unit (Digital Unit (DU)), and the remote device 160 is also referred to as a radio processing unit (Radio Unit (RU)). The central aggregation device 110 and the remote device 160 are connected to each other via a wired transmission path called front-haul. Interface such as the Common Public Radio Interface (CPRI) is used as such an interface between the central aggregation device 110 and the remote device 160.

The central aggregation device 210 and the remote device 260 respectively correspond to the central aggregation device 110 and the remote device 160 explained above, but have different layer configurations from that of the central aggregation device 110 and the remote device 160.

Specifically, the central aggregation device 210 includes the medium access control layer (MAC) and the radio link control layer (RLC). The remote device 260 includes the radio physical layer (L1) and the radio unit (RF).

Furthermore, as explained above, the central aggregation device 210 is connected to the central aggregation device 110 via X2-AP', X2-U' interface.

### (2) Functional block configuration of radio communication system

A functional block configuration of the radio communication system 10 is explained below. Specifically, functional block configurations of the central aggregation device 210 and the remote device 260 are explained.

### (2.1) Central aggregation device 210

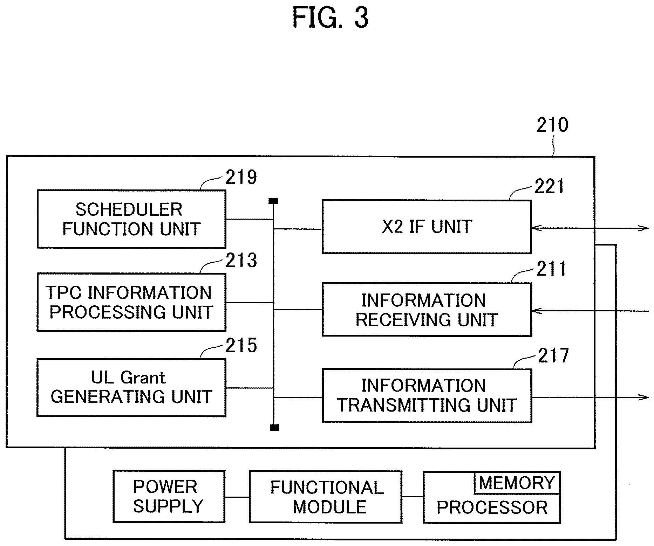

FIG. 3 is a functional block diagram of the central aggregation device 210. As shown in FIG. 3, the central aggregation device 210 includes an information receiving unit 211, TPC information processing unit 213, UL Grant generating unit 215, an information transmitting unit 217, a scheduler function unit 219, and X2 IF unit 221.

Furthermore, as shown in FIG. 3, each functional block of the central aggregation device 210 is implemented by hardware elements such as a processor (including a memory), a functional module (external connection IF and the like), and a power supply.

The information receiving unit 211 receives information transmitted from the remote device 260. Specifically, the information receiving unit 211 receives information (hereinafter, predetermined information) necessary to perform transmission power control (TPC) of an uplink signal transmitted from the user device 300. Contents of the predetermined information are explained later.

The TPC information processing unit 213 processes, based on the predetermined information received by the information receiving unit 211, control information that causes the user device 300 to perform the transmission power control. In the present embodiment, the TPC information processing unit 213 constitutes a control information processing unit.

Specifically, the TPC information processing unit 213 processes, based on the predetermined information, whether to cause the transmission power of the uplink signal from the user device 300 to increase (up) or decrease (down), and generates control information that causes the transmission power to increase or control information that causes the transmission power to decrease.

The UL Grant generating unit 215 generates UL Grant, which is scheduling information of the uplink radio resource (various channels and the like) from the user device 300 to the radio base station 200. Specifically, the UL Grant generating unit 215 generates the UL Grant based on instructions received from the scheduler function unit 219.

The information transmitting unit 217 transmits to the remote device 260 information that includes the UL Grant and the like.

The scheduler function unit 219 performs, depending on the status of a plurality of the user devices 300 connected to the radio base station 200, requests transmitted from the respective user devices 300, and the like, scheduling (assignment) of the radio resource to the user devices 300. Moreover, the scheduler function unit 219 utilizes the TPC information processed by the TPC information processing unit 213 for the next scheduling of the radio resource.

Specifically, the scheduler function unit 219 assigns to the user device 300 having transmission / reception data the radio resource (transmission bandwidth, transmission power, and the like) available on the shared data channel.

The X2 IF unit 221 provides an interface to realize communication with the central aggregation device 110. Specifically, the X2 IF unit 221 is an interface that directly connects the central aggregation device 110 and the central aggregation device 210 by using the MAC and the RLC. However, it is preferable that the X2 IF unit 221 is an existing open interface. The transmission / reception data of the user device 300 is relayed to the radio base station 100 via the X2 IF unit 221.

### (2.2) Remote device 260

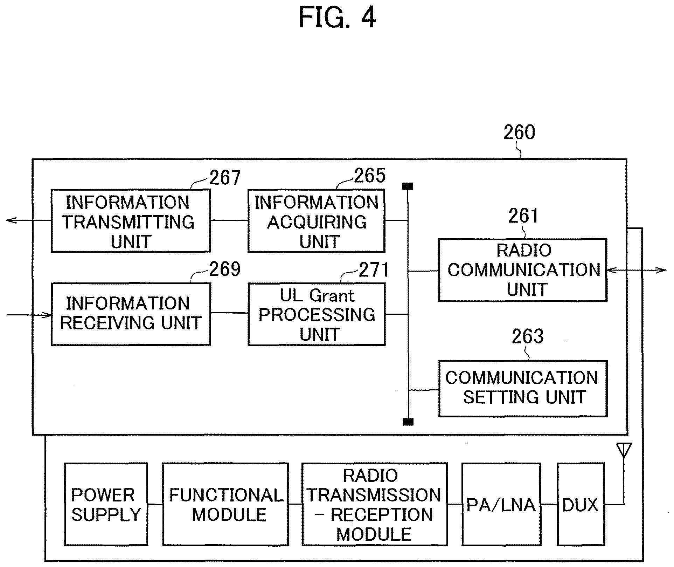

FIG. 4 is a functional block diagram of the remote device 260. As shown in FIG. 4, the remote device 260 includes a radio communication unit 261, a communication setting unit 263, an information acquiring unit 265, an information transmitting unit 267, an information receiving unit 269, and UL Grant processing unit 271.

Furthermore, as shown in FIG. 4, each functional block of the remote device 260 is implemented by hardware elements such as a duplexer, the PA (Power Amplifier) / LNA (Low Noise Amplifier), a radio transmission - reception module (RF conversion), a functional module (quadrature modulation - demodulation and the like), and a power supply.

The radio communication unit 261 performs radio communication with the user device 300. Specifically, the radio communication unit 261 performs radio communication with the 5G user device 300. As explained above, the radio communication unit 261 can support technologies such as the Massive MIMO, the carrier aggregation (CA), and the dual connectivity (DC).

The communication setting unit 263 sets in advance, prior to the radio communication with the user device 300, information necessary to receive the uplink signal transmitted from the user device 300 (for example, frequency, bandwidth, cell ID, and the like).

The information acquiring unit 265 acquires the predetermined information necessary to perform the transmission power control of the uplink signal transmitted from the user device 300. Furthermore, as explained above, the contents of the predetermined information will be explained later.

The information transmitting unit 267 transmits to the central aggregation device 210 the predetermined information acquired by the information acquiring unit 265. Moreover, the information receiving unit 269 receives the information transmitted from the central aggregation device 210. Specifically, the information receiving unit 269 receives the information that includes the UL Grant transmitted from the central aggregation device 210 and the like.

The UL Grant processing unit 271 transmits to the user device 300 the UL Grant, based on the information that includes the UL Grant received by the information receiving unit 269. Specifically, the UL Grant processing unit 271 notifies the user device 300 of the UL Grant, which is the scheduling information of the uplink radio resource (various channels), by using a predetermined channel (for example, Physical Downlink Control Channel (PDCCH)).

### (3) Operation of radio communication system

An operation of the radio communication system 10 is explained below. Specifically, the transmission power control of the uplink signal transmitted from the user device 300, which is performed by the radio base station 200, is explained.

### (3.1) Overview of operation

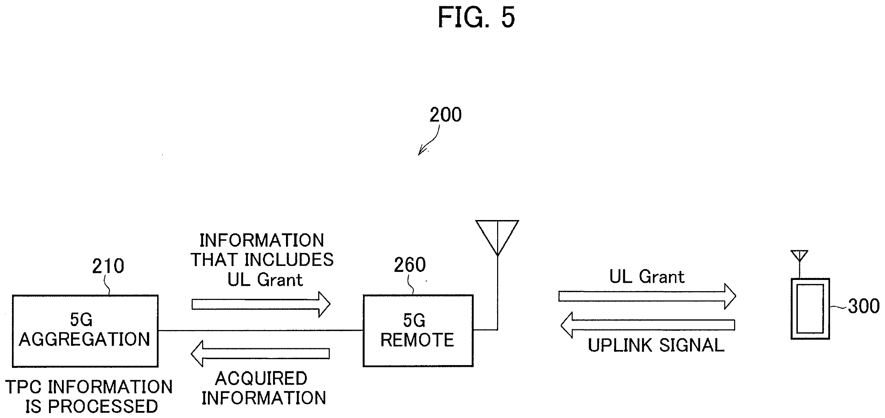

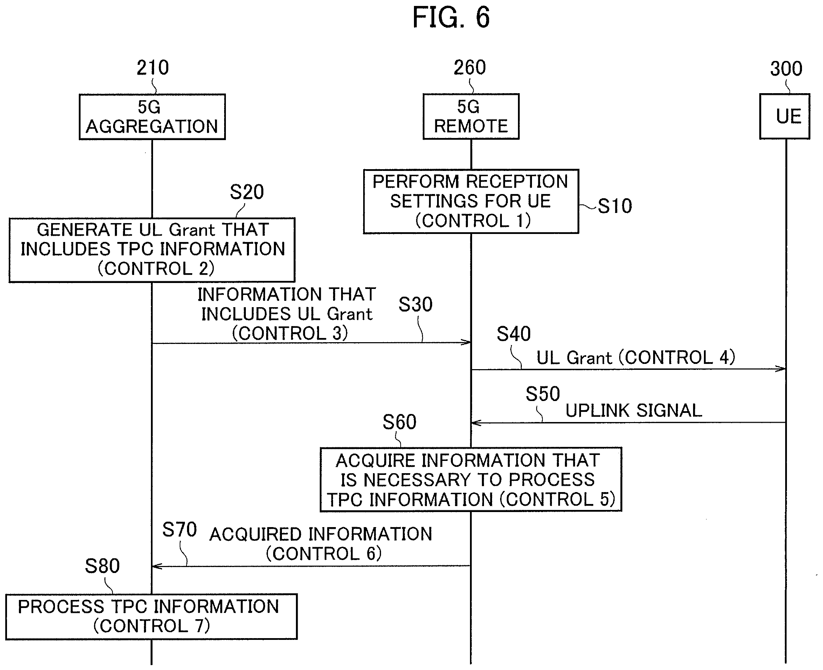

FIG. 5 is a conceptual diagram of the transmission power control (TPC) performed in the central aggregation device 210, the remote device 260, and the user device 300. FIG. 6 is a diagram showing a sequence of the transmission power control according to the present embodiment.

As shown in FIG. 5, in the present embodiment, the central aggregation device 210 processes the TPC information. Specifically, the central aggregation device 210 processes, based on the information related to the TPC acquired by the remote device 260 (acquired information), whether to cause the transmission power of the uplink signal transmitted from the user device 300 to increase (up) or decrease (down).

Specifically, as shown in FIG. 6, the remote device 260 performs reception settings for the user device 300 (UE) (hereinafter, "Control 1") (S10). The remote device 260 sets in advance the information necessary to receive the uplink signal transmitted by the user device 300 (for example, frequency, bandwidth, cell ID, and the like).

Moreover, the central aggregation device 210 generates the UL Grant that includes the TPC information, specifically, the control information that causes the transmission power to increase, or the control information that causes the transmission power to decrease (hereinafter, "Control 2") (S20). More specifically, the scheduler function unit 219 (UL MAC scheduler) determines the radio resource to be assigned to the user device 300, and generates the UL Grant that includes the TPC information.

Then, the central aggregation device 210 transmits to the remote device 260 the information that includes the generated UL Grant (hereinafter, "Control 3") (S30).

The remote device 260 transmits to the user device 300, based on the information that includes the UL Grant received from the central aggregation device 210, that UL Grant, in other words, the scheduling information (hereinafter, "Control 4") (S40).

The user device 300 transmits, based on the received UL Grant, an uplink signal (radio signal) at a predetermined transmission power (S50).

The remote device 260 acquires, based on the status of the uplink signal transmitted from the user device 300, the information necessary to process the TPC information (hereinafter, "Control 5") (S60).

The remote device 260 transmits the acquired information to the central aggregation device 210 (hereinafter, "Control 6") (S70).

The central aggregation device 210 processes, based on the information received from the remote device 260, the TPC information, in other words, the control information that causes the transmission power to increase or the control information that causes the transmission power to decrease (hereinafter, "Control 7") (S80). Moreover, the central aggregation device 210 utilizes the TPC information for the next scheduling of the radio resource.

### (3.2) Details of operation (Controls)

Controls 1 to 7 are explained below in detail.

### (3.2.1) Control 1

In Control 1, the remote device 260 presets (Configure / Setup) the information necessary so as to make the signal to be transmitted by the user device 300 receivable.

Among the necessary information, static information (for example, frequency, bandwidth, cell ID, and the like) is set based on the information received from the central aggregation device 210 at the time of cell setup.

Moreover, dynamically changing information (for example, information related to notification information and the like) can be set to Semi Static, in other words, can be set according to the reception of the information transmitted from the central aggregation device 210.

### (3.2.2) Control 2

In Control 2, the central aggregation device 210 (UL MAC scheduler) determines the radio resource to be assigned to the user device 300, and generates the UL Grant that includes the TPC information.

Specifically, values set by an external I/F are used as the TPC information for the initial transmission thereof. Moreover, when the TPC information is processed once through the radio communication with the user device 300, the central aggregation device 210 is caused to reflect the TPC information when generating a subsequent UL Grant.

### (3.2.3) Control 3

In Control 3, the central aggregation device 210 transmits to the remote device 260 the information that includes the generated UL Grant.

Specifically, to enable the central aggregation device 210 to uniquely identify the reception signal transmitted from the user device 300, a timestamp (for example, System Frame Number) and a user identifier (for example, Cell-Radio Network Temporary Identifier (C-RNTI)) are assigned to the UL Grant, in addition to the information necessary to perform data transmission by the user device 300.

### (3.2.4) Control 4

In Control 4, the remote device 260 transmits to the user device 300, based on the information that includes the UL Grant received from the central aggregation device 210, that UL Grant, in other words, the scheduling information.

Specifically, to receive the signal transmitted by the user device 300, the remote device 260 extracts and retains the following information from the UL Grant:

- Timestamp information assigned by the central aggregation device 210 in Control 3
- User identifier assigned by the central aggregation device 210 in Control 3
- Frequency band (for example, resource block number) used for data transmission by the user device 300

### (3.2.5) Control 5

In Control 5, the remote device 260 acquires, based on the status of the uplink signal transmitted from the user device 300, the information necessary to process the TPC information (predetermined information).

Specifically, the remote device 260 performs the following processes:
- Determining, based on the timestamp information and the user identifier retained in Control 4, whether the signal is transmitted by the UE (or is a reception trigger) or not
- Performing quality estimation of the reception signal (for example, SIR estimation)
- Retaining the quality estimation value of the reception signal

### (3.2.6) Control 6

In Control 6, the remote device 260 transmits to the central aggregation device 210 the information necessary to process the TPC information (predetermined information).

Specifically, the remote device 260 transmits to the central aggregation device 210 the following information:
- Quality estimation value of the reception signal (quality information)

When transmitting the quality information, the timestamp information and the user identifier are assigned to the quality estimation value. Because of that, the central aggregation device 210 uniquely identifies whether the quality information corresponds to any of the signals assigned by the MAC scheduler. Furthermore, the quality information can be transmitted along with the reception signals (Physical Uplink Control Channel (PUCCH), Physical Uplink Shared Channel (PUSCH), Sounding Reference Signal (SRS), and Random Access Channel (RACH) Message 3).
- Power Head Room (PHR) (if the user device 300 is also transmitting PHR)
- Interference power measured by the remote device 260
- Radio access technology (RAT) information (operation where 4G, 5G and Licensed Assisted Access (LAA) are used together is assumed)

Moreover, the contents of the quality information to be transmitted are as follows:
- Quality information of the entire frequency band (also includes information that is not updated)
- Only the quality information updated upon receiving the new reception

The transmission formats of the quality information are as follows:
- Quality information value (direct value that is not processed)
- Quantized value of the quality information value
- Difference value between the quality information retained by the remote device 260 and the quality information updated upon receiving the new reception
- Quantized value of the difference between the quality information retained by the remote device 260 and the quality information updated upon receiving the new reception

Moreover, the PHR can be transmitted by any of the following methods:
- Transmitting MAC CE (Control Element)
- Extracting a part of the contents of the MAC CE, and forwarding only the essential information in accordance with the frame protocol of the front-haul
- Transmitting the information extracted from the contents of the MAC CE; specifically, path loss between the user device 300 and the radio base station 200, activation status of each CC (determined in Ci field), estimated P-MPR (Maximum Power Reduction) back-off value for each CC, and uplink transmission status (determined in V field) in each CC are transmitted. Furthermore, it is allowable if the entire information is not transmitted, and only a part of the information is transmitted.

### (3.2.7) Control 7

In Control 7, the central aggregation device 210 processes the TPC information, based on the information received from the remote device 260.

Specifically, the central aggregation device 210 performs the following processes:
- Determining, based on the timestamp information and the user identifier, that a reception quality of the UE is transmitted from the remote device 260
- Processing, based on the received quality information and a retained target reception quality (for example, Target SIR), the TPC information (for example, TPC Command) corresponding to the UE

Furthermore, when the target signal is the SRS, it is desirable that the central aggregation device 210 processes the TPC information by considering transmission power offset of the PUSCH / SRS of the UE. Moreover, when the target signal is the PUCCH, it is desirable that the central aggregation device 210 processes the TPC information by considering a transmission power offset according to the number of Channel Quality Indicator (CQI) bits transmitted by the UE.

Furthermore, if a positive (power increase) TPC Command is instructed and the increased transmission power exceeds the maximum transmission power of the UE, the central aggregation device 210 can suppress such transmission of the TPC information. Moreover, if a negative (power decrease) TPC Command is instructed and the decreased transmission power drops below the minimum transmission power expected for the UE, the central aggregation device 210 can suppress such transmission of the TPC information.
- Managing the target reception quality for each channel (PUSCH, PUCCH, SRS, and RACH (Message3)), each remote device (RU), or each user

Moreover, in the central aggregation device 210, the target reception quality can be dynamically controlled by performing the following series of processes:
- Transmitting PHR information of the UE from the remote device 260
- Calculating path loss based on the PHR information and the information necessary to perform transmission with the UE (for example, the number of resource blocks)
- Changing dynamically the target reception quality based on the calculated path loss value and the interference power value measured by the remote device 260

Furthermore, the central aggregation device 210 can manage the path loss value, the interference power value and the target reception quality together in a table.

The processes performed in Control 7 explained above are performed for each user (user device 300), based on the user identifier. Moreover, the central aggregation device 210 utilizes the TPC information to schedule the next radio resource, in other words, to generate the UL Grant.

### (3.3) Modifications

Modifications of the processes performed in Controls 1 to 7 are explained below.

### (3.3.1) Control 2

The UL Grant generated in Control 2 can be generated by the remote device 260, instead of the central aggregation device 210. In such a case, the central aggregation device 210 transmits to the remote device 260 the following information:
- Carrier Indicator
- Frequency hopping information
- Frequency positions assigned to PUSCH, PUCCH, and RACH Message 3
- PUSCH, PUCCH, RACH Message 3 data
- TPC information
- Modulation and Coding Scheme (MCS), Modulation scheme
- Redundancy Version (RV)
- Cyclic shift information for Demodulation Reference Signal (DMRS)
- CSI request information
- SRS request information

Furthermore, instead of the above information, information equivalent to DCI format 0 specified in 3GPP TS 36.212 Clause 5.3.3.1.1 can be transmitted.
- User identifier
- Timestamp information

### (3.3.2) Dynamic control of target reception quality

Instead of the central aggregation device 210, the remote device 260 can perform the dynamic control of the target reception quality. In such a case, the central aggregation device 210 further transmits to the remote device 260 the following information:
- Maximum transmission power
- Uplink signal transmission band corresponding to the PHR reported by the UE
- Transmission power offset for the uplink signal transmission
- Transmission power offset based on the modulation scheme and coding rate
- Cumulative value of the TPC information

Moreover, the remote device 260 further transmits to the central aggregation device 210 the following information:
- Target reception quality (for example, Target SIR information)

The remote device 260 calculates, based on the information transmitted in advance from the central aggregation device 210 and the PHR information transmitted by the UE, the path loss. The remote device 260 calculates, based on the calculated path loss, an appropriate target reception quality (for example, Target SIR and the like), and transmits the target reception quality to the central aggregation device 210.

The transmission format of the target reception quality can be a format that transmits the actual value of the path loss or can be a format that transmits index corresponding to the actual value of the path loss, based on the index of the target reception quality prepared in advance.

### (3.3.3) TPC information of RACH Message 3

When setting the static TPC information, the TPC Command (increase or decrease) can be determined by an external interface. In other words, it is allowable if the information required for processing the TPC information is not transmitted or received between the central aggregation device 210 and the remote device 260.

When the TPC Command is input via the external interface, the central aggregation device 210 can use the table that links the index and the TPC Command.

### (3.3.4) Method to notify plurality of UEs of TPC information

The TPC information that is notified individually to the user (user device 300) by using the UL Grant can be combined and transmitted as one piece of information to a plurality of the UEs. This configuration assumes an operation equivalent to 3GPP TS 36.212 Clause 5.3.3.1.6 (DCI format 3) and 5.3.3.1.7 (DCI format 3A).

### (3.3.5) When UE is connected to plurality of remote devices 260

Because the quality information of the radio signal transmitted between the UE and a plurality of the remote devices 260 to which the UE is connected is terminated, that is, can be acquired in the central aggregation device 210, the central aggregation device 210 processes, based on the plurality of the quality information, an appropriate TPC information for the UE.

Moreover, because the PHR is transmitted from the remote device 260 to the central aggregation device 210, the central aggregation device 210 can process the TPC information in which the maximum transmission power set in the respective remote device 260 is considered.

Furthermore, when the remote device 260 (referred to as RU#1) that transmits the UL Grant differs from the remote device 260 (referred to as RU#2) that receives the signal transmitted from the UE because of cross carrier scheduling, Controls 3 to 7 explained above are also performed in the RU#2. In such a process, an operation such as the CA in uplink (UL CA) is assumed.

### (3.3.6) Other

The controls explained above, in addition to the PUSCH, can be applied to the PUCCH and the SRS. In such a case, instead of the UL Grant, RRC setup information can be used.

Moreover, as for the user identifier, by using the following identifiers, a plurality of the users (user device 300) can be controlled based on one identifier:

- Identifier for a user group in which the plurality of the users is grouped
- Identifier for each type (operating system and the like) of the user device

### (4) Effects and advantages

According to the embodiment explained above, the following operational effects can be obtained. Specifically, the central aggregation device 210 receives from the remote device 260 the predetermined information (quality estimation value of reception signal, PHR, and the like) necessary to perform the transmission power control of the uplink signal transmitted from the user device 300, and based on the predetermined information, processes the TPC information (control information) that causes the user device 300 to perform the transmission power control.

Accordingly, even if the function of the upper layer such as the MAC scheduler and the function of the radio physical layer are mounted separately in the central aggregation device 210 and the remote device 260, the central aggregation device 210 can reliably recognize the information necessary to perform the transmission power control. With this configuration, even if the functions are mounted separately in the central aggregation device 210 and the remote device 260, an appropriate transmission power control for the user device 300 can be realized.

Furthermore, according to the present embodiment, because the central aggregation device 210 can reliably recognize the information necessary to perform the transmission power control, assignment of an appropriate radio resource to the user device 300 based on the information becomes possible.

### Second Embodiment

A second embodiment of the present invention is explained below. In the first embodiment explained above, the central aggregation device 210 processes the TPC information. However, in the present embodiment, the remote device 260A processes the TPC information and notifies the central aggregation device 210A of the processed TPC information.

An explanation is mainly given below about the portions that are different from the first embodiment, and an explanation of portions that are similar to the first embodiment is accordingly omitted.

### (1) Functional block configuration of radio communication system

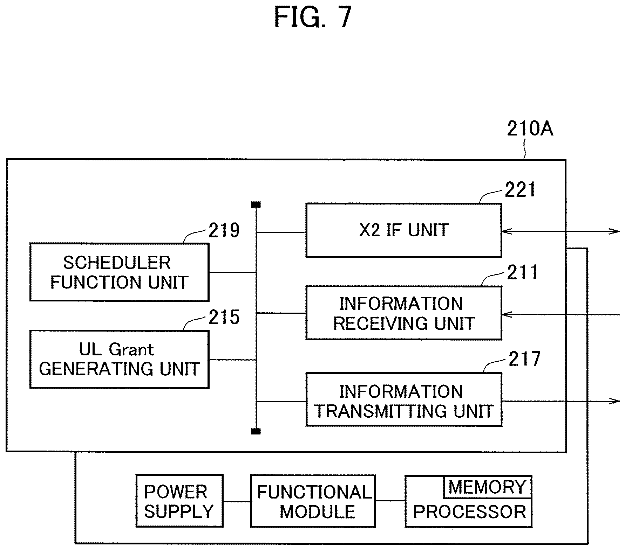

FIG. 7 is a functional block diagram of a central aggregation device 210A according to the present embodiment. Compared to the central aggregation device 210 (refer to FIG. 3) according to the first embodiment, the central aggregation device 210A does not include the TPC information processing unit 213.

Moreover, in the present embodiment, the information receiving unit 211 receives from the remote device 260 the control information that causes the user device 300 to perform the transmission power control, in other words, the TPC information.

Furthermore, in the present embodiment, the scheduler function unit 219 (MAC scheduler) performs, based on the TPC information received by the information receiving unit 211, a predetermined process that is performed during the radio communication with the user device 300. In the present embodiment, the scheduler function unit 219 constitutes a process executing unit.

Specifically, the scheduler function unit 219 utilizes the TPC information received from the remote device 260 for the next scheduling of the radio resource.

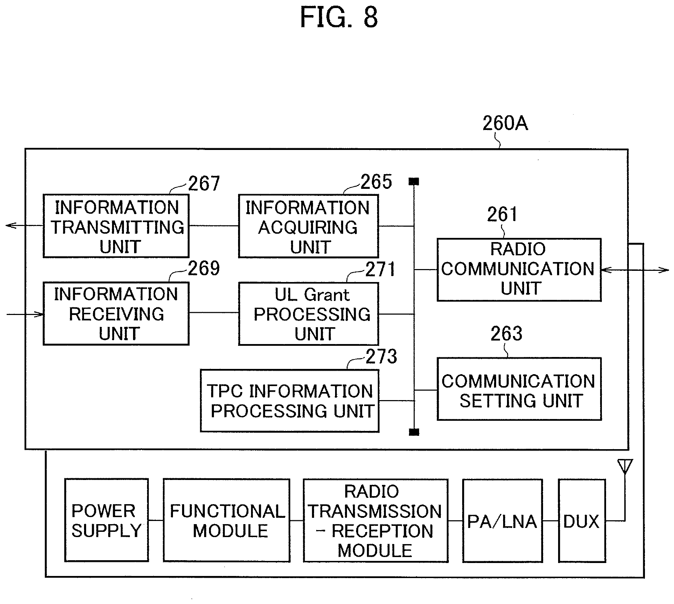

FIG. 8 is a functional block diagram of a remote device 260A according to the present embodiment. Compared to the remote device 260 (refer to FIG. 4) according to the first embodiment, the remote device 260A further includes TPC information processing unit 273.

Moreover, the information acquiring unit 265 according to the present embodiment acquires predetermined information necessary to perform the transmission power control of an uplink signal transmitted from the user device 300, specifically, similar to the first embodiment, the quality estimation value of the reception signal, the PHR, and the like.

The TPC information processing unit 273 processes, based on the predetermined information acquired by the information acquiring unit 265, control information (TPC information) that causes the user device 300 to perform the transmission power control. In the present embodiment, the TPC information processing unit 273 constitutes a control information processing unit.

Moreover, the information transmitting unit 267 according to the present embodiment transmits to the central aggregation device 210A the TPC information processed by the TPC information processing unit 273.

### (2) Operation of radio communication system

An operation of the radio communication system 10 according to the present embodiment is explained below. Specifically, similar to the first embodiment, the transmission power control of the uplink signal transmitted from the user device 300, which is performed by a radio base station 200A, is explained.

### (2.1) Overview of operation

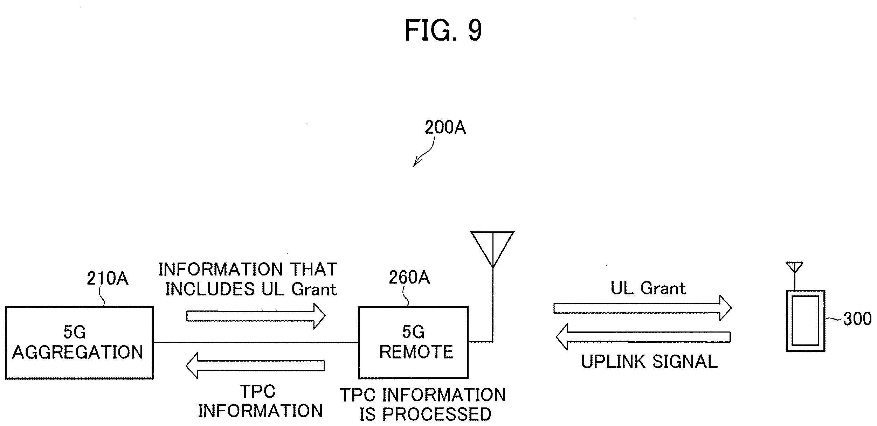

FIG. 9 is a conceptual diagram of the transmission power control (TPC) according to the present embodiment. Even though FIG. 9 corresponds to FIG. 5, a part of the processes in which the remote device 260A that constitutes the radio base station 200A processes the TPC information and transmits the processed TPC information to the central aggregation device 210A differs from the processes explained in the first embodiment.

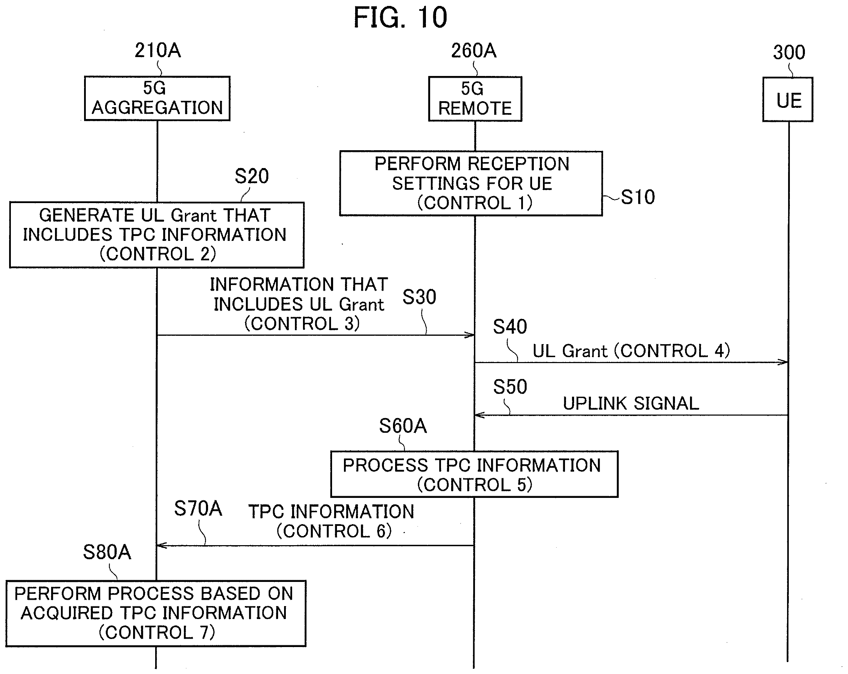

FIG. 10 shows a sequence of the transmission power control according to the present embodiment. Even though FIG. 10 corresponds to FIG. 6, contents of Steps S60A, S70A, and S80A differ from those explained in the first embodiment.

Specifically, the remote device 260A acquires the information necessary to process the TPC information, and based on the acquired information, processes the TPC information, in other words, processes the control information that causes the transmission power to increase, or the control information that causes the transmission power to decrease (hereinafter, "Control 5") (S60A).

The remote device 260A transmits to the central aggregation device 210A the processed TPC information (hereinafter, "Control 6") (S70A).

The central aggregation device 210A acquires the TPC information from the remote device 260A, and based on the acquired TPC information, performs process (hereinafter, "Control 7") (S80A). Specifically, the central aggregation device 210A utilizes the TPC information received from the remote device 260A for the next scheduling of the radio resource.

### (2.2) Details of operation (Controls)

Controls 1 to 7 shown in FIG. 10 are explained below in detail.

### (2.2.1) Control 1

In Control 1, similar to the first embodiment, the remote device 260A presets (Configure / Setup) the information necessary so as to make a signal transmitted by the user device 300 receivable. However, the following information is also set in addition to the information set in Control 1 according to the first embodiment:

- Target reception quality (because it is assumed that target reception quality changes as a result of dynamic control)
- Number of CQI bits
- Offset of UE transmission power in the SRS and the PUSCH
- Maximum transmission power of the UE
- Lower limit value of transmission power expected for the UE

Furthermore, among the information mentioned above, concerning the information that may change (information that may change to Semi Static), periodically updated information can be transmitted from the central aggregation device 210A.

### (2.2.2) Control 5

Controls 2 to 4 are same as those explained in the first embodiment, hence their explanation is omitted.

In Control 5, the remote device 260A processes the TPC information. Specifically, the remote device 260A performs the following processes:
- Determining, based on the timestamp information and the user identifier retained in the Control 4, whether it is a signal transmitted by the UE (or it is a reception trigger) or not
- Performing quality estimation of the reception signal (for example, SIR estimation)
- Processing, based on the received quality information and the retained target reception quality (for example, Target SIR), the TPC information (for example, TPC Command) corresponding to the UE

Furthermore, when the target signal is the SRS, it is desirable that the remote device 260A processes the TPC information by considering the transmission power offset of the PUSCH / SRS of the UE. Moreover, when the target signal is the PUCCH, it is desirable that the TPC information is processed by considering the transmission power offset in accordance with the number of the CQI bits transmitted by the UE.

Furthermore, if a positive (power increase) TPC Command is instructed and the increased transmission power exceeds the maximum transmission power of the UE, the remote device 260A can suppress such transmission of the TPC information. Moreover, if a negative (power decrease) TPC Command is instructed and the decreased transmission power drops below the minimum transmission power expected for the UE, the remote device 260A can suppress such transmission of the TPC information.
- Managing the target reception quality for each channel (PUSCH, PUCCH, SRS, and RACH (Message3)), each remote device (RU), or each user

Moreover, in the remote device 260A, the target reception quality can be dynamically controlled by performing the following series of processes:
- Calculating path loss based on the PHR information and the information necessary to perform transmission with the UE (for example, the number of resource blocks)
- Changing dynamically the target reception quality, based on the calculated path loss value and the measured interference power value

Furthermore, the remote device 260A performs, based on the user identifier, the processes explained above for each user (user device 300). Moreover, the remote device 260A retains the quality estimation value of the reception signal received from the user device 300.

### (2.2.3) Control 6

In Control 6, the remote device 260A transmits the processed TPC information to the central aggregation device 210A. The processed TPC information can be transmitted by any of the following methods:
- Transmitting TPC information every time it is processed;
- Transmitting TPC information only when the value that changes the transmission power of the UE is processed;
- Transmitting the latest TPC information when a predetermined time of the previous TPC information has elapsed

Furthermore, the transmission format of the TPC information can be a format that transmits the actual value (increase or decrease because of TPC Command) of the TPC information, a format that transmits, based on the prepared index of the TPC information, the index corresponding to the actual value of the TPC information, or a format that transmits the cumulative value (cumulative increase / decrease because of a plurality of TPC Commands) of the TPC information.

Moreover, the timestamp information and the user identifier are assigned to the TPC information. Furthermore, the TPC information can be transmitted by combining with the reception signal (PUCCH, PUSCH, SRS, and RACH Message 3). Furthermore, the radio access technology (RAT) information can be transmitted by combining with the TPC information (operation where 4G, 5G, and Licensed Assisted Access (LAA) are used together is assumed).

The remote device 260A transmits to the central aggregation device 210A the quality information based on the result of the quality estimation of the reception signal in Control 5. This transmitted quality information is utilized to perform AMC (Adaptive Modulation and Coding) control in the central aggregation device 210A.

Moreover, the contents of the quality information to be transmitted are as follows:
- Quality information of the entire frequency band (also includes information that is not updated)
- Only the quality information updated upon receiving the new reception

The transmission formats of the quality information are as follows:
- Quality information value (direct value that is not processed)
- Quantized value of the quality information value
- Quantized value of the difference between the quality information retained by the remote device 260A and the quality information updated upon receiving the new reception (2.2.4) Control 7

In Control 7, the central aggregation device 210A acquires the TPC information from the remote device 260A, and based on the acquired TPC information, performs the process. Specifically, the central aggregation device 210A utilizes the TPC information acquired from the remote device 260A for the next scheduling of the radio resource, in other words, for MAC scheduler operation.

More specifically, the central aggregation device 210A reflects, at the time of generating a subsequent UL Grant, the TPC information acquired from the remote device 260A. Moreover, at this time, it is desirable that the central aggregation device 210A recognizes, based on the timestamp information and the user identifier, the target user device 300.

### (2.3) Modifications

Modifications of the processes performed in Controls 1 to 7 are explained below.

### (2.3.1) TPC information of RACH Message 3

Similar to the first embodiment, when setting the static TPC information, the TPC Command (increase or decrease) can be determined by the external interface.

### (2.3.2) Method to notify plurality of UEs of TPC information

Similar to the first embodiment, the TPC information that is notified individually to the user (user device 300) by using the UL Grant can be combined and transmitted as one information to a plurality of the UEs.

### (2.3.3) When UE is connected to plurality of remote devices 260A

Among the information included in the PHR transmitted by the user device 300, the information corresponding to the remote device 260A that has not received the PHR is transmitted and received between a plurality of the remote devices 260A. The remote device 260A can transmit to another remote device 260A such information via the central aggregation device 210A, or the remote device 260A can directly transmit the information to an another remote device 260A.

Moreover, the PHR can be transmitted by any of the following methods:
- Transmitting MAC CE (Control Element)
- Extracting a part of the contents of the MAC CE, and forwarding only the essential information in accordance with the frame protocol of the front-haul
- Transmitting the information extracted from the contents of the MAC CE; specifically, path loss between the user device 300 and the radio base station 200A, activation status of each CC (determined in Ci field), estimated P-MPR (Maximum Power Reduction) back-off value in each CC, and uplink transmission status (determined in V field) in each CC. Furthermore, it is allowable if the entire information is not transmitted, and only a part of the information is transmitted.

Moreover, when different TPC information is received from a plurality of the remote devices 260A, the central aggregation device 210A can select, based on the quality information transmitted from the remote device 260A to the central aggregation device 210A, the appropriate TPC information. In such a process, an operation such as the CA in uplink (UL CA) is assumed.

### (2.3.4) Other

Similar to the first embodiment, the controls explained above can be applied not only to the PUSCH but also to the PUCCH and the SRS.

Moreover, as for the user identifier, too, similar to the first embodiment, a plurality of the users (user device 300) can be controlled based on one identifier.

### (3) Effects and advantages

According to the present embodiment, the remote device 260A processes, based on the predetermined information necessary to perform the transmission power control of the uplink signal transmitted from the user device 300 (quality estimation value of reception signal, PHR, and the like), the TPC information (control information) that causes the user device 300 to perform the transmission power control. Moreover, the remote device 260A transmits to the central aggregation device 210A the processed TPC information.

The central aggregation device 210A performs, based on the received TPC information, the predetermined process during the radio communication with the user device 300, specifically, the central aggregation device 210A utilizes the TPC information received from the remote device 260A for the next scheduling of the radio resource.

Accordingly, even when the function of the upper layer such as the MAC scheduler and the function of the radio physical layer are mounted separately in the central aggregation device 210A and the remote device 260A, the remote device 260A can realize an appropriate transmission power control for the user device 300. Moreover, because the central aggregation device 210A can reliably recognize the information necessary to perform the transmission power control, assignment of an appropriate radio resource to the user device 300 based on that information becomes possible.

Furthermore, in the present embodiment, the amount of information can be reduced compared to the first embodiment, because it is possible to transmit the TPC information from the remote device 260A to the central aggregation device 210A as an index.

Moreover, in the present embodiment, because the remote device 260A processes the TPC information, the central aggregation device 210A does not require the detailed quality information necessary to process the TPC information for the user device 300. Therefore, the remote device 260A only needs to notify the central aggregation device 210A of the quantized value, making it possible to further reduce the information amount. Furthermore, the quality information needs to be retained by considering the entire band as a target and values after the decimal point need to be managed. Therefore, if the quality information without quantization is transmitted from the remote device 260A to the central aggregation device 210A, it is assumed that a significant amount of information is transmitted.

### Other Embodiments

The present invention has been explained in detail by using the above mentioned embodiments; however, it is self-evident to a person skilled in the art that the present invention is not limited to the embodiments explained herein and that the embodiments can be modified or improved in various ways.

For example, in the first embodiment explained above, as shown in FIG. 2, even if the central aggregation device 210 includes the MAC and the RLC, and the remote device 260 includes the radio unit (RF) and the radio physical layer (L1), a protocol stack that the central aggregation device 210 and the remote device 260 must include is not necessarily limited to the format shown in FIG. 2.

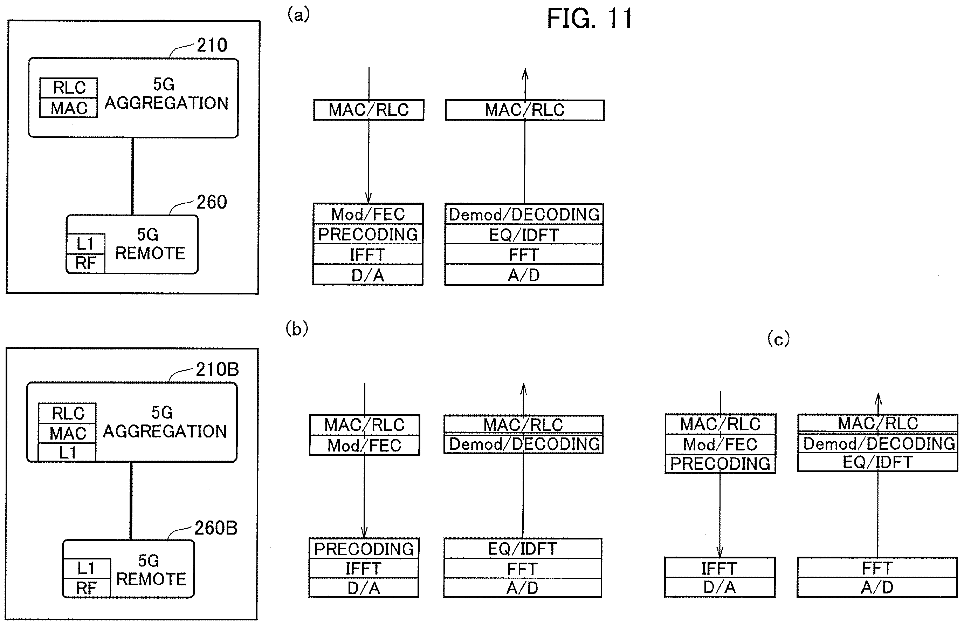

FIGS. 11(a) to 11(c) show illustrative embodiments of a protocol stack that can be included in the central aggregation device and the remote device. Specifically, FIG. 11(a) shows details of the protocol stack shown in FIG. 2.

In FIG. 11 (a), the MAC and the L1 are separated. Such a separated format is referred to as MAC-PHY split. As shown in FIG. 11(a), downlink (transmitting direction) L1 includes an encoding and modulating unit (Mod / FEC), a precoding unit, IFFT unit, and D / A converting unit. Moreover, uplink (receiving direction) L1 includes A / D converting unit, FFT unit, EQ / IDFT unit, and a demodulating and decoding unit (DeMod / decoding).

On the other hand, in FIGS. 11(b) and 11(c), a part of the L1 functions are included in a central aggregation device 210B and the remaining functions of the same L1 are included in a remote device 260B. Such a separated format is referred to as PHY split. The present invention explained above can also be applied to such a separated format of the protocol stack.

In FIG. 2, even though the central aggregation device 210 includes only the MAC and the RLC, the central aggregation device 210 can further include the PDCP and the RRC. Moreover, in such a configuration, the central aggregation device 210 can be directly connected to the core network 20, instead of being connected via the central aggregation device 110.

Moreover, even though the TPC information processing function is included in the central aggregation device 210 in the first embodiment explained above and the TPC information processing function is included in the remote device 260A in the second embodiment, any one of the radio base station 200 and the radio base station 200A can be arranged in the radio communication system 10, or the radio base station 200 and the radio base station 200A can be arranged together in the radio communication system 10.

Furthermore, in all the embodiments explained above, the terms defined in the 3GPP are mainly used in the explanation, but these terms can be replaced with other terms. For example, as mentioned in the embodiments explained above, the user device can be called a radio communication terminal, a mobile station, a user terminal, and the like, and the radio base station can be called a node, a radio communication device or system, and the like.

The sequences, flowcharts, and the like in the embodiments described above may be rearranged in order unless it causes a contradiction.

Note that the terms used in the descriptions of this specification and/or terms necessary to understand this specification may be replaced with terms having the same or similar meanings. For example, a channel and/or a symbol may be a signal, or a signal may be a message. In addition, the terms "system" and "network" may be used interchangeably.

Moreover, the above-described parameters and the like may be expressed by absolute values, by relative values from specified values, or by other associated information. For example, radio resources may be instructed by an index.

The radio base stations (the radio base stations 100 and 200, hereinafter referred as a base station) can accommodate one or more (for example, three) cells (also called sectors). When a base station has multiple cells, the entire coverage area of the base station can be divided into multiple smaller areas.

The term "cell" or "sector" means part or the whole of the coverage area provided by a base station and/or a subsystem of the base station that provide communication services in this coverage. Further, the terms "base station", "eNB", "cell", and "sector" can be used interchangeably in this specification. In some cases, a base station (BS) is also called terms such as a fixed station, a NodeB, an eNodeB (eNB), an access point, a femtocell, and a small cell.

The UE 300 is also called in some cases by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

"The expression "based on" used in this specification does not mean "based only on" unless explicitly stated otherwise. In other words, the expression "based on" means both "based only on" and "based at least on".

In addition, the terms "including", "comprising", and other variations thereof are intended to be comprehensive as with "comprise". Moreover, the term "or" used in this specification or the scope of claims is intended not to be exclusive disjunction.

Any reference of the elements using names such as "first", "second", and the like used in this specification does not limit the amount or the order of these elements in general. These names can be used in this specification as a convenient way of discriminating two or more elements. Thus, referring to a first element and a second element does not mean that only the two elements can be employed in the specification or that the first element should precede the second element in some form.

In the entirety of this specification, for example, when articles such as a, an, and the in English are added in translation, these articles also mean to include plurality as long as the context does not clearly indicate the singularity.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application No. 2016-010798 (filed on January 22, 2016) are incorporated in the description of the present application by reference.

### INDUSTRIAL APPLICABILITY

According to the radio base station and the communication control method explained above, an appropriate transmission power control on a user device can be realized even when the function of the upper layer such as the MAC scheduler and the function of the radio physical layer are mounted separately.

### EXPLANATION OF REFERENCE NUMERALS

- 10: radio communication system
- 20: core network
- 100: radio base station
- 110: central aggregation device
- 160: remote device
- 200, 200A: radio base station
- 210, 210A, 210B: central aggregation device
- 211: information receiving unit
- 213: TPC information processing unit
- 215: UL Grant generating unit
- 217: information transmitting unit
- 219: scheduler function unit
- 221 X2: IF unit
- 260, 260A, 260B: remote device
- 261: radio communication unit
- 263: communication setting unit
- 265: information acquiring unit
- 267: information transmitting unit
- 269: information receiving unit
- 271: UL Grant processing unit
- 300: user device

## Claims

1. A radio base station that comprises a remote device and a central aggregation device, and performs radio communication with a user device, wherein
the remote device includes
an information acquiring unit that acquires predetermined information necessary to perform a transmission power control of an uplink signal transmitted from the user device; and
an information transmitting unit that transmits to the central aggregation device the predetermined information acquired by the information acquiring unit, and
the central aggregation device includes
an information receiving unit that receives the predetermined information; and
a control information processing unit that processes, based on the predetermined information received by the information receiving unit, control information that causes the user device to perform the transmission power control.

2. A radio base station that comprises a remote device and a central aggregation device, and performs radio communication with a user device, wherein
the remote device includes,
an information acquiring unit that acquires predetermined information necessary to perform a transmission power control of an uplink signal transmitted from the user device;
a control information processing unit that processes, based on the predetermined information acquired by the information acquiring unit, control information that causes the user device to perform the transmission power control; and
an information transmitting unit that transmits to the central aggregation device the control information processed by the control information processing unit, and
the central aggregation device includes
an information receiving unit that receives the control information; and
a process executing unit that performs, based on the control information received by the information receiving unit, a predetermined process during the radio communication with the user device.

3. A communication control method implemented in a radio base station that comprises a remote device and a central aggregation device and performs radio communication with a user device, the communication control method comprising:
acquiring including the remote device acquiring predetermined information necessary to perform transmission power control of an uplink signal transmitted from the user device;
transmitting including the remote device transmitting to the central aggregation device the acquired predetermined information;
receiving including the central aggregation device receiving the predetermined information; and
processing including the central aggregation device processing, based on the received predetermined information, control information that causes the user device to perform the transmission power control.

4. A communication control method implemented in a radio base station that comprises a remote device and a central aggregation device and performs radio communication with a user device, the communication control method comprising:
acquiring including the remote device acquiring predetermined information necessary to perform transmission power control of an uplink signal transmitted from the user device;
processing including the remote device processing, based on the acquired predetermined information, control information that causes the user device to perform the transmission power control;
transmitting including the remote device transmitting to the central aggregation device the processed control information;
receiving including the central aggregation device receiving the control information; and
performing including the central aggregation device processing, based on the received control information, executing a predetermined process during the radio communication with the user device.
